# EUROPÄISCHE PATENTSCHRIFT

(11) **EP 1 545 281 B1**
(45) Veröffentlichungstag und Bekanntmachung des Hinweises auf die Patenterteilung: **08.08.2007**
(21) Anmeldenummer: 03753444.3
(22) Anmeldetag: 22.09.2003
(51) Int. Cl.: A47J 43/07

(54) **Arbeitswerkzeug für ein Zerkleinerungsgerät**
Work tool for a grinding appliance
Appareil de travail pour un appareil de broyage

(30) Priorität: 25.09.2002 DE 10244716
(43) Veröffentlichungstag der Anmeldung: 29.06.2005
(73) Patentinhaber: BSH Bosch und Siemens Hausgeräte GmbH, 81739 München (DE)
(72) Erfinder: BREZOVNIK, Peter, 3330 Mozirje (SI); PAVLOVIC, Henrik, Ljubno ob Savin 3333 (SI); ZIBRET, Igor, 3327 Smartno ob Paki (SI)
(86) Internationale Anmeldenummer: PCT/EP2003/010532
(87) Internationale Veröffentlichungsnummer: WO 2005/037037

(56) Entgegenhaltungen:
- CH-A- 404 101
- DE-C- 19 502 216
- GB-A- 644 802
- GB-A- 898 976

## Beschreibung

Die vorliegende Erfindung betrifft eine Vorrichtung zum Zerkleinern von festen Lebensmittelbestandteilen mit mindestens einer um eine Drehachse in Drehung versetzbaren Messereinrichtung einschließlich einer Klinge, die eine vorgegebene Krümmung in einer Schnittebene längs der Drehachse aufweist.

Darüber hinaus ist auch ein Verfahren zum Zerkleinern von festen Lebensmittelbestandteilen durch ein um eine Drehachse drehendes Arbeitswerkzeug in einem Behältnis offenbart.

Derartige Vorrichtungen zum Zerkleinern von Lebensmitteln werden in Haushaltsgeräten eingesetzt, mit denen insbesondere Eiswürfel zerkleinert werden. Darüber hinaus können diese Vorrichtungen auch als Arbeitswerkzeuge zum Mischen von flüssigen und breiigen Lebensmitteln oder zum Schlagen von Sahne und Eischnee in den Haushaltsgeräten verwendet werden. Bei festen zu zerkleinernden Lebensmitteln ist es jedoch notwendig, dass sämtliche in einem Behälter befindlichen Schichten des Lebensmittels bei der Bearbeitung erfasst werden. Dazu ist es erforderlich, dass durch das Arbeitswerkzeug in dem Behältnis eine gewisse Durchmischung stattfindet.

Zu den erwähnten Haushaltsgeräten zählen sogenannte Chopper (Zerhacker), Mixer, lce Crusher und dergleichen. Ein Chopper besteht typischerweise aus einem schüsselartigen Behältnis und einer mit hoher Drehzahl rotierenden Funktionseinheit (Arbeitswerkzeug), die in der Regel am Boden des Behältnisses angeordnet ist. Der Antrieb dieser Funktionseinheit beziehungsweise dieses Werkzeugs kann unterhalb oder oberhalb des Behältnisses vorgesehen sein. Das Behältnis wird meist mit einem Deckel verschlossen, um ein Herausspritzen aus dem Behältnis zu vermeiden.

Eine gattungsgemäße Vorrichtung zum Zerkleinern von festen Lebensmittelbestandteilen ist aus der japanischen Patentanmeldung JP-A- 101 921 59 bekannt. Dort ist ein Mixer beschrieben, der ein sternförmiges Schneidewerkzeug mit vier Schneidabschnitten umfasst. Das Schneidwerkzeug wird von einer drehbaren Welle angetrieben. Jeder Schneideabschnitt besitzt einen horizontalen Abschnitt in Zentrumsnähe, der dann in radialer Richtung nach außen in einen vertikalen Abschnitt mündet. Mit diesem Arbeitswerkzeug ist jedoch ein Bearbeiten von Eiswürfeln im Wesentlichen nur in der Schicht des Mixerbehälters möglich, die vertikal von dem Schneidewerkzeug erfasst wird.

Aus der deutschen Offenlegungsschrift DE 100 01 455 A1 ist eine weitere Vorrichtung zum Zerkleinern von Lebensmitteln bekannt. Sie weist ein Zerkleinerungswerkzeug auf, das im Wesentlichen aus einer Werkzeugspindel und damit verbundenen Klingen gebildet ist. Speziell sind am Außenumfang der Werkzeugspindel in deren unterem Drittel um 90° versetzt vier Klingen angebracht. Die Klingen sind in der Höhe versetzt angeordnet und in unterschiedlichen Winkeln abgewinkelt, so dass die von ihnen auf die Nahrungsmittel ausgeübte Kraft auch in Richtung der Öffnungen eines unter den Klingen angeordneten Siebs gerichtet ist, um möglichst schnell die zerkleinerten Nahrungsmittel die Öffnungen passieren zu lassen, sobald sie die Durchlassbreite der Öffnungen erreicht haben. Das Zerkleinerungswerkzeug ist hierzu in der oberen Hälfte eines Behälterkörpers angeordnet. In diesem Bearbeitungsbereich sind konzentrisch mit der Mittellinie das Zerkleinerungswerkzeug, das Sieb und ein Siebhalter angeordnet. Die untere Hälfte des Behälterkörpers dient als Sammelbereich für die im Bearbeitungsbereich zerkleinerten Lebensmittel. Das Sieb ist dabei kegelstumpfförmig ausgebildet, wobei die Seitenwände, welche das Zerkleinerungswerkzeug umgeben, längliche horizontal und parallel zueinander verlaufende Schlitze aufweisen. Die im Bearbeitungsbereich angeordneten Lebensmittel werden von den rotierenden Klingen zerteilt und im Bearbeitungsbereich herumgeschleudert. Sobald die zerkleinerten Lebensmittel eine Stückgröße erreichen, die kleiner als die im Sieb vorgesehenen Schlitze sind, gelangen die Lebensmittelteile in den Sammelbereich des Behälterkörpers.

Aus der GB 898 976 A ist ein Schneidwerkzeug mit entweder geraden oder mit einer Krümmung ohne Wendepunkt ausgebildeten Klingen bekannt.

Die aus der DE 195 02 216 C und CH 404 101 A bekannten Messereinrichtungen weisen stets zwei Klingen auf.

Schließlich offenbart die GB 644 802 A eine Rührschaufel (scoop worm), welche überhaupt keine Messereinrichtung umfasst.

Die Aufgabe der vorliegenden Erfindung besteht darin, Eiswürfel und andere Lebensmittelbestandteile effektiver in einem Haushaltsgerät zerkleinern zu können, wobei auf Siebeinsätze verzichtet werden kann.

Erfindungsgemäß wird diese Aufgabe gelöst durch eine Vorrichtung zum Zerkleinern von festen Lebensmittelbestandteilen mit mindestens einer um eine Drehachse in Drehung versetzbaren Messereinrichtung einschließlich einer Klinge, die eine vorgegebene Krümmung in einer Schnittebene längs der Drehachse aufweist, wobei die Krümmung einen Wendepunkt besitzt, d.h. die Klinge besitzt in einer Schnittebene längs der Drehachse eine im Wesentlichen S-förmige Gestalt, und die Messereinrichtung weist eine einzige Klinge auf, die im Wesentlichen in einer einzigen Richtung radial nach außen ragt.

In vorteilhafter Weise kann durch Verwendung nur einer einzigen Klinge, die von der Drehachse unsymmetrisch in eine Richtung absteht, ein zu- rasches Zerkleinern insbesondere auch von Eiswürfeln verhindert werden. Die unsymmetrische Anordnung der Klinge und die dadurch entstehende Unwucht spielt für den Zerkleinerungsvorgang auf Grund der hervorgerufenen Schläge nur eine untergeordnete Rolle.

Die erfindungsgemäße Vorrichtung eignet sich insb. zur Durchführung eines Verfahrens zum Zerkleinern von festen Lebensmittelbestandteilen durch ein ,um eine Drehachse drehendes. Arbeitswerkzeug in einem Behältnis mit den Schritten: Zerkleinern der Lebensmittelbestandteile in einem Bereich einer im Wesentlichen senkrecht zu der Drehachse verlaufenden, ersten Rotationsfläche mit vorgegebener radialer Erstreckung und Zerkleinern der Lebensmittelbestandteile im Bereich einer im Wesentlichen zylindermantelförmigen Fläche koaxial mit der Drehachse, wobei der Zylinder eine vorgegebene axiale Erstreckung besitzt, sowie Zerkleinern der Lebensmittelbestandteile im Bereich einer im Wesentlichen senkrecht zu der Drehachse verlaufenden, zweiten Rotationsfläche, die im Abstand der vorgegebenen axialen Erstreckung im Wesentlichen parallel zu der ersten Fläche angeordnet ist.

Mit der erfindungsgemäßen Vorrichtung ist es möglich, Eiswürfel und andere Lebensmittel definiert zu zerkleinern, wobei der gesamte Inhalt der Schüssel, in der sich das Lebensmittel befindet, bearbeitet wird. Die bereits zerkleinerten Teile des Lebensmittels werden in Richtung zum Boden der Schüssel transportiert, so dass die noch nicht zerkleinerten Lebensmittel bearbeitet werden können. Auf ein zusätzliches Sieb als Einsatz in die Schüssel kann somit verzichtet werden.

Die Messereinrichtung der Zerkleinerungsvorrichtung weist vorteilhafterweise einen von der Drehachse radial nach außen weisenden ersten Klingenabschnitt und einen am distalen Ende des ersten Klingenabschnitts anschließenden, im Wesentlichen parallel zu der Drehachse verlaufenden zweiten Klingenabschnitt auf, sowie einen dritten Klingenabschnitt an dem distalen Ende des zweiten Klingenabschnitts, wobei sich der dritte Klingenabschnitt im Wesentlichen senkrecht zur Drehachse erstreckt. Diese Dreigliedrigkeit der Messereinrichtung erlaubt es, die einzelnen Funktionsabschnitte wohldefiniert und nahezu unabhängig voneinander auszubilden.

Vorzugsweise besitzt die Messereinrichtung einen im Wesentlichen rechtwinkligen Knickbereich zwischen dem ersten und zweiten Klingenabschnitt. Darüber hinaus kann sie einen derartigen Knickbereich auch zwischen dem zweiten und dritten Klingenabschnitt besitzen. Der zweite Klingenabschnitt besitzt günstigerweise eine Länge zwischen 20 und 60 mm und insbesondere 40 mm. Damit lassen sich Eiswürfel in einem gängigen Behälter mit vorgegebener maximaler Füllhöhe optimal bearbeiten.

Vorteilhafterweise umfasst die Zerkleinerungsvorrichtung eine Kunststoffantriebswelle, in die die Messereinrichtung eingespritzt ist. Damit kann das Arbeitswerkzeug bzw. die Zerkleinerungsvorrichtung Kostengünstig hergestellt werden und zusätzlicher Montage aufwand entfällt.

Die vorliegende Erfindung wird nun anhand der beigefügten Zeichnungen näher erläutert, in denen zeigen:
- Figur 1: eine Querschnittsansicht durch einen erfindungsgemäßen Chopper;
- Figur 2: eine Draufsicht auf eine erfindungsgemäße Zerkleinerungsvorrichtung; und
- Figur 3: eine Draufsicht auf eine alternative Zerkleinerungsvorrichtung.

Die nachfolgend beschriebenen Ausführungsformen stellen bevorzugte Ausführungsbeispiele der vorliegenden Erfindung dar.

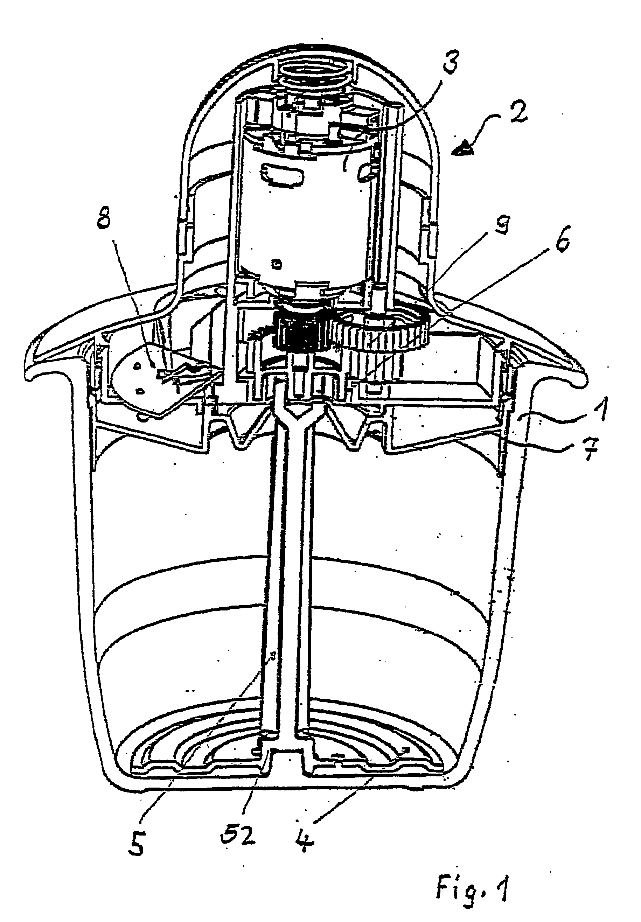

Figur 1 zeigt einen Querschnitt durch einen Chopper. Der Chopper umfasst eine Schüssel 1 und einen Deckel 2. Der Deckel 2 dient nicht nur zum Abdichten der Schüssel 1 sondern beinhaltet gleichzeitig einen elektrischen Kleinmotor 3 einschließlich Getriebe zum Antrieb einer Schlagscheibe 4, die am Boden der Schüssel 1 drehbar gelagert ist. Eine Welle 5 überträgt das Drehmoment vom Getriebe des Elektromotors 3 zu der Schlagscheibe 4. Die Schlagscheibe 4 dient beispielsweise zum Schlagen von Eiklar oder Sahne.

Die Lagerung der Welle 5 in dem Deckel 2 unterhalb des Getriebes des Elektromotors 3 erfolgt durch ein Axial/Radial-Gleitlager 6.

An der Unterseite des Deckels zum Inneren der Schüssel zugewandt befindet sich ein Deckabschnitt 7. Dieser Deckabschnitt dient zum Abdecken beziehungsweise Abdichten des in der Schüssel 1 befindlichen fließenden Mediums, wie Flüssigkeiten, Brei, Eiswürfel, etc. Der Deckabschnitt 7 ist zur Durchführung der Welle 5 im Zentrum durchbrochen.

Der Deckel 2 weist ferner einen integrierten Schalter 8 auf, der mit einer Sicherheitsfunktion ausgestattet ist. Erst wenn der Deckel 2 auf die Schüssel 1 ordnungsgemäß aufgebracht ist, erlaubt dieser Sicherheitsschalter 8 den Betrieb des Choppers.

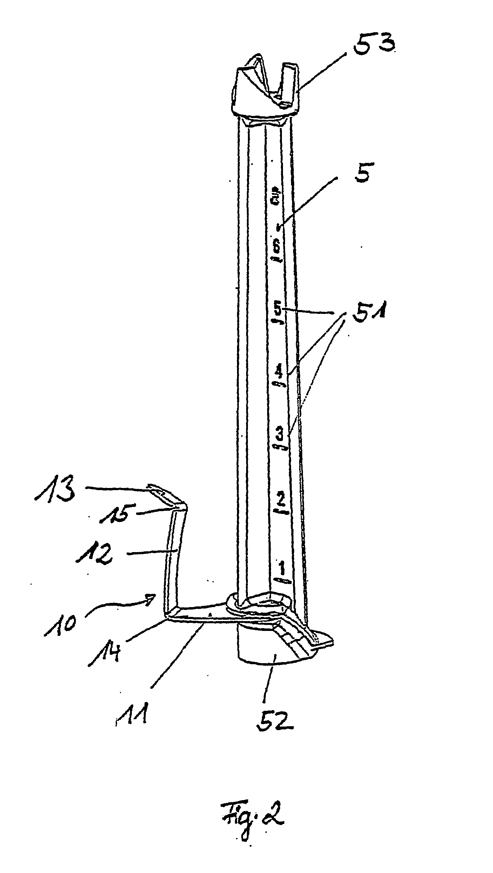

In Figur 2 ist eine Draufsicht auf eine erfindungsgemäße Vorrichtung zum Zerkleinern von festen Lebensmittelbestandteilen dargestellt. Diese Zerkleinerungsvorrichtung eignet sich als Wechselwerkzeug für den in Figur 1 dargestellten Chopper und wird anstatt der Schlagscheibe 4 eingesetzt. Die Vorrichtung besteht aus der Antriebswelle 5, die im vorliegenden Fall ein sternförmiges Profil aufweist. Damit kann sich die Antriebswelle 5 längs ihrer Drehachse in einem gewissen Rahmen verwinden. Entlang der Antriebswelle 5 sind Maßangaben 51 für die Füllhöhe in dem Zerkleinerungsbehälter 1 angebracht.

An dem dem Boden des Zerkleinerungsbehälters '1 zugewandten Ende der Antriebswelle 5 ist eine Gleitlagerbuchse 52 angebracht. Diese dient zur radialen Fixierung der Zerkleinerungsvorrichtung beziehungsweise des Arbeitswerkzeugs am Boden des Behälters 1.

An dem der Gleitlagerbuchse 52 gegenüberliegenden Ende der Antriebswelle 5 ist eine Antriebskupplungskomponente 53 vorgesehen. Diese greift in eine entsprechende Abtriebskupplungskomponente, die von einem Untersetzungsgetriebe 9 gemäß Figur 1 angetrieben wird. Unmittelbar über der Lagerbuchse 52 ist entsprechend Figur 2 ein einziges Messer beziehungsweise eine Schlagklinge 10 eingespritzt. Sie umfasst einen ersten Klingenabschnitt 11, der radial von der Antriebswelle 5 nach außen weist. Am äußeren Ende des ersten Klingenabschnitts 11, seinem distalen Ende, ist ein zweiter Klingenabschnitt 12 angebracht, der sich im Wesentlichen parallel zu der Antriebswelle 5 nach oben, d.h. in Richtung zu der Antriebskupplungskomponente 53 erstreckt. Am obersten Ende des zweiten Klingenabschnitts 12, d.h. an dessen distalem Ende, befindet sich ein im Wesentlichen radial nach außen und leicht schräg nach oben weisender dritter Klingenabschnitt 13. Der erste Klingenabschnitt 11 ist mit dem zweiten Klingenabschnitt 12 durch einen im Wesentlichen rechtwinkligen Knickabschnitt 14 verbunden. In gleicher Weise ist der zweite Klingenabschnitt 12 mit dem dritten Klingenabschnitt 13 durch einen ebenfalls im Wesentlichen rechtwinkligen Knickabschnitt 15 verbunden. Somit erhält die Schlagklinge eine Z-förmige Gestalt.

Der zweite Klingenabschnitt 12 weist etwa eine Länge von 40 mm auf. Dadurch erfolgt eine Bearbeitung des Lebensmittels in deutlich vertikal beabstandeten, horizontalen Schichten beziehungsweise Flächen. Darüber hinaus wird das Lebensmittel durch den vertikal angeordneten zweiten Klingenabschnitt auf einer Zylindermantelfläche bearbeitet. Die leichte Schrägneigung des dritten Klingenabschnitts 13 bringt eine gewisse Umwälzung des Lebensmittels in dem Behälter 1, so dass speziell bereits zerschlagene Eiswürfel in Richtung zum Boden des Behälters 1 gedrängt werden, während noch zu bearbeitende Eiswürfel in den Bearbeitungsbereich des dritten Klingenabschnitts 13 nachrutschen können. Dadurch kann verhindert werden, dass nur die Eiswürfel einer Schicht sehr stark zu einer Art Schnee zerkleinert werden, während die Eiswürfel anderer Schichten unbearbeitet bleiben. Vielmehr werden sämtliche in dem Behälter gefüllten Eiswürfel zu einer definierten Größe zerkleinert. Durch die Verwendung nur einer einzigen Klinge kann die Intensität des Zerkleinerungsvorgangs besser zeitgesteuert werden als bei mehreren Klingen, mit denen eine wesentlich raschere Zerkleinerung erfolgt.

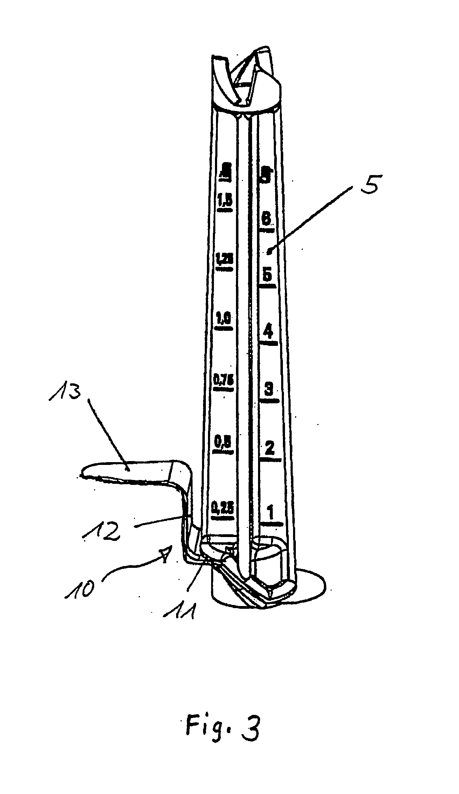

In Figur 3 ist eine alternative Zerkleinerungsvorrichtung dargestellt. Sie entspricht im Wesentlichen der von Figur 2. Lediglich die Schlagklinge 10 ist in ihren Einzelabschnitten anders dimensioniert. So ist gegenüber der Ausführungsform von Figur 2 der erste Klingenabschnitt 11 verkürzt und der dritte Klingenabschnitt 13 verlängert. Der zweite Klingenabschnitt 12 besitzt im Wesentlichen unveränderte Länge. Der dritte Klingenabschnitt 13 weist ohne Schrägstellung senkrecht zur Drehachse der Antriebswelle 5 radial nach außen. Auch mit dieser Klingengestalt sind gute Arbeitsergebnisse zu erzielen.

Die vorliegende Erfindung eignet sich insbesondere Zur Durchführung eines Verfahrens zum Zerkleinern von festen Lebensmittelbestandteilen durch ein um eine Drehachse drehendes Arbeitswerkzeug 5, 10 in einem Behältnis 1 mit den Schritten:
Zerkleinern der Lebensmittelbestandteile im Bereich einer im Wesentlichen senkrecht zu der Drehachse verlaufenden, ersten Rotationsfläche mit vorgegebener radialer Erstreckung; und
Zerkleinern der Lebensmittelbestandteile im Bereich einer im Wesentlichen zylindermantelförmigen Fläche koaxial mit der Drehachse, wobei der Zylinder eine vorgegebene axiale Erstreckung besitzt;
   sowie
Zerkleinern der Lebensmittelbestandteile im Bereich einer im Wesentlichen senkrecht zu der Drehachse verlaufenden, zweiten Rotationsfläche, die im Abstand der genannten vorgegebenen axialen Erstreckung im Wesentlichen parallel zu der ersten Fläche angeordnet ist;
wobei sämtliche Zerkleinerungsschritte mit einer einzigen, an dem Arbeitswerkzeug 5, 10 angebrachten Messereinrichtung 10 durchgeführt werden.

## Patentansprüche

1. Vorrichtung zum Zerkleinern von festen Lebensmittelbestandteilen mit mindestens einer um eine Drehachse in Drehung versetzbaren Messereinrichtung (10) mit einer flächigen Klinge, die im Schnitt mit einer längs der Drehachse verlaufenden Ebene eine vorgegebene Krümmungslinie mit einem Wendepunkt aufweist, **dadurch gekennzeichnet, dass** die Messereinrichtung (10) eine einzige Klinge aufweist, die im Wesentlichen in einer einzigen Richtung radial nach außen ragt.

2. Vorrichtung nach Anspruch 1 **dadurch gekennzeichnet, dass** die Messereinrichtung (10) einen von der Drehachse radial nach außen weisenden ersten Klingenabschnitt (11) und einen am distalen Ende des ersten Klingenabschnitts (11) anschließenden, im Wesentlichen parallel zur Drehachse verlaufenden zweiten Klingenabschnitt (12) sowie einen dritten Klingenabschnitt (13) an dem distalen Ende des zweiten Klingenabschnitts (12) aufweist, wobei sich der dritte Klingenabschnitt (13) im Wesentlichen senkrecht zur Drehachse erstreckt.

3. Vorrichtung nach Anspruch 2, wobei die Messereinrichtung (10) einen im Wesentlichen rechtwinkligen Knickabschnitt (14) zwischen dem ersten und zweiten Klingenabschnitt (11, 12) aufweist.

4. Vorrichtung nach Anspruch 2 oder 3, wobei die Messereinrichtung (10) einen im Wesentlichen rechtwinkligen Knickabschnitt (15) zwischen dem zweiten und dritten Klingenabschnitt (12, 13) aufweist.

5. Vorrichtung nach einem der Ansprüche 2 bis 4, wobei der zweite Klingenabschnitt (12) eine Länge zwischen 20 und 40 mm besitzt.

6. Vorrichtung nach Anspruch 5, wobei der zweite Klingenabschnitt (12) eine Länge von etwa 40 mm besitzt.

7. Vorrichtung nach einem der Ansprüche 1 bis 6, die eine Kunststoffantriebswelle (5) umfasst, an welche die Messereinrichtung (10) angespritzt ist.

8. Haushaltsgerät, insbesondere Mixer, Zerkleinerungsgerät oder Chopper, mit der Vorrichtung zum Zerkleinern gemäß einem der Ansprüche 1 bis 7.

## Claims

1. Device for comminuting solid foodstuff components, comprising at least one knife device (10), which can be set into rotation about an axis of rotation, with an areal blade which has in section in a plane extending longitudinally of the axis of rotation a predetermined line of curvature with a point of inflection, **characterised in that** the knife device (10) has a single blade which projects radially outwardly substantially in a single direction.

2. Device according to claim 1, **characterised in that** the knife device (10) has a first blade section (11) pointing radially outwardly from the axis of rotation and a second blade section (12), which adjoins the distal end of the first blade section (11) and extends substantially parallel to the axis of rotation, as well as a third blade section (13) at the distal end of the second blade section (12), wherein the third blade section (13) extends substantially perpendicularly to the axis of rotation.

3. Device according to claim 2, wherein the knife device (10) has a substantially rectangular kink section (14) between the first and second blade sections (11, 12).

4. Device according to claim 2 or 3, wherein the knife device (10) has a substantially rectangular kink section (15) between the second and third blade sections (12,13).

5. Device according to one of claims 2 to 4, wherein the second blade section (12) has a length between 20 and 40 millimetres.

6. Device according to claim 5, wherein the second blade section (12) has a length of approximately 40 millimetres.

7. Device according to one of claims 1 to 6, which comprises a plastics material drive shaft (5) at which the knife device (10) is injection moulded.

8. Domestic appliance, particularly mixer, comminuting apparatus or chopper, with the device for comminuting according to one of claims 1 to 7.

## Revendications

1. Dispositif pour le broyage de constituants solides de denrées alimentaires avec au moins un dispositif de couteau (10) pouvant être mis en rotation autour d'un axe de rotation avec une lame plane, qui présente en coupe avec un plan agencé le long de l'axe de rotation une ligne de courbure prédéfinie avec un point d'inflexion, **caractérisé en ce que** le dispositif de couteau (10) présente une unique lame qui dépasse sensiblement dans une seule direction radialement vers l'extérieur.

2. Dispositif selon la revendication 1, **caractérisé en ce que** le dispositif de couteau (10) présente une première partie de lame (11) dirigée à partir de l'axe de rotation radialement vers l'extérieur et une seconde partie de lame (12) se raccordant sur l'extrémité distale de la première partie de lame (11) et agencée sensiblement parallèlement à l'axe de rotation ainsi qu'une troisième partie de lame (13) sur l'extrémité distale de la seconde partie de lame (12), la troisième partie de lame (13) s'étendant sensiblement perpendiculairement à l'axe de rotation.

3. Dispositif selon la revendication 2, le dispositif de couteau (10) présentant une partie de pliage (14) sensiblement perpendiculaire entre la première et la seconde parties de lame (11,12).

4. Dispositif selon la revendication 2 ou 3, le dispositif de couteau (10) présentant une partie de pliage (15) sensiblement perpendiculaire entre la seconde et la troisième parties de lame (12, 13).

5. Dispositif selon l'une quelconque des revendications 2 à 4, la seconde partie de lame (12) présentant une longueur comprise entre 20 et 40 mm.

6. Dispositif selon la revendication 5, la seconde partie de lame (12) présentant une longueur d'environ 40 mm.

7. Dispositif selon l'une quelconque des revendications 1 à 6, qui comprend un arbre d'entraînement en plastique (5) sur lequel est injecté le dispositif de couteau (10).

8. Appareil ménager, en particulier batteur, appareil de broyage ou hacheur, avec le dispositif pour le broyage selon l'une quelconque des revendications 1 à 7.
